# EUROPEAN PATENT SPECIFICATION

(11) **EP 1 071 915 B1**
(45) Date of publication and mention of the grant of the patent: **18.06.2003**
(21) Application number: 99916038.5
(22) Date of filing: 13.04.1999
(51) Int. Cl.: F28D 20/00

(54) **SYSTEM FOR THERMO-CHEMICAL ACCUMULATION OF HEAT**
VERFAHREN ZUR THERMOCHEMISCHEN WÄRMESPEICHERUNG
SYSTEME PERMETTANT UNE ACCUMULATION THERMOCHIMIQUE DE CHALEUR

(30) Priority: 15.04.1998 IT RM980233; 04.05.1998 IT RM980287
(43) Date of publication of application: 31.01.2001
(73) Proprietor: Progetto Fa.Ro. S.R.L., 00199 Roma (IT)
(72) Inventor: PETESSE, Pietro, I-06037 S. Eraclio di Foligno (IT)
(74) Representative: Iannone, Carlo Luigi
(86) International application number: IT9900087
(87) International publication number: WO99053257

(56) References cited:
- EP-A- 0 029 799
- EP-A- 0 343 650
- GB-A- 2 174 191
- US-A- 3 955 554
- US-A- 4 054 126
- US-A- 5 186 241

## Description

The present invention relates to a system for thermo-chemical of heat and for exploiting the same.

More specifically, the invention concerns a system of the above kind which allows to accumulate energy, for example, but not only from solar and/or aeolic energy, or from the disposal of urban solid wastes or from any kind of available energy, during a favourable season to the specific activity, and to exploit the same during another season.

As it is well known, during the years many attempts have been made to try to positively exploit solar and aeolic energy, as well as other kind of energy, such as energy from the disposal of urban solid wastes, i.e an energy which is abundantly present during specific seasons in particular seasons when it is lower the energy request, using the same during the less favourable seasons and wherein a higher demand of energy is present.

In the following, in some parts of the specification it will be made specific reference to the solar andlor aeolic energy, but it is to be understood that the invention cannot be so limited.

Now, none of the solutions already studied is able to allow to advantageously and with satisfying efficiency accumulate during the summer the solar and/or aeolic energy, in order to be able to exploit the same during the winter, when the demand for the energy is higher particularly for heating.

US-A-3,255,554 describes a system according to the precharacterising portion of claim 1.

In this situation, the Applicant has realised a system able to allow the accumulation of energy and the following exploitation during a following season.

The solution suggested according to the present invention provides the exploitation of a well known chemical reaction, particularly the reaction between calcium oxide and water, and vice versa, which develops heat during the reaction between calcium oxide and water, and which requires heat for the reverse reaction from which calcium hydroxide is obtained.

The Applicant has realised a system exploiting, on the basis of said reaction, the solar heat or the aeolic energy to obtain dissociation of calcium hydroxide, thus obtaining calcium oxide and water, and obtains again the heat during winter from the reaction of calcium oxide previously obtained.

It is therefore specific object of the present invention a system for thermo-chemical accumulation of heat, comprising a calcium oxide regeneration section and a heat generation section, said calcium oxide regeneration section comprising an energy production central, a regenerator, calcium hydroxide feeding means to feed hydroxide calcium within said regenerator, and means for the separated extraction of calcium oxide and water generated by said regenerator, said heat generation section comprising a reactor within which calcium oxide and water are fed, and from which heat produced by the reaction between calcium hydroxide and water, and calcium hydroxide to be sent to the regeneration station are extracted by a heat exchanger, characterised in that said energy production central provides overheated vapour at about 600°C or electric energy, in that the reaction between calcium oxide and water occurs with a stoichiometric amount of water, in that calcium oxide and calcium hydroxide are stored in physically separated places, and in that calcium oxide obtained in the regenerator is made passing within a heat exchanger, which lowers its temperature, extracted heat being employed to raise the water temperature, which at the beginning is at about 40°C and coming from a further heat exchanger, thus obtaining overheated vapour which is sent to said further heat exchanger, to raise the temperature of dry air coming out from said condenser and to send the same heated to the regenerator.

Preferably, according to the invention, said regeneration sections are closed circuit connected for the calcium oxide, calcium hydroxide and water exchange.

Furthermore, according to the invention, said regeneration and generation section can be separate, the transfer of the calcium oxide and calcium hydroxide occurring by transport means, preferably within reservoirs without carbon dioxide.

Still according to the invention, said calcium hydroxide is fed within said regenerator after having raised the temperature at about 500 °C within a heat exchanger, preferably employing overheated vapour coming from a condenser employing humid and hot air produced in the regenerator.

Always according to the invention, calcium oxide obtained in the regenerator is made passing within a heat exchanger, which lowers its temperature, extracted heat being employed to raise the water temperature, which at the beginning is at about 40°C and coming from a further heat exchanger, thus obtaining overheated vapour which is sent to said further heat exchanger, to raise the temperature of dry air coming out from said condenser and to send the same heated to the regenerator.

Always according to the invention, water extracted by said condenser from the overheated vapour coming out from the regenerator is collected within a storage reservoir, to use the same in the heat generation section.

Still according to the invention, in said heat generation section, calcium oxide can be fed within a first heat exchanger, to raise its temperature up to about 30°C, before entering within the reactor.

Furthermore, according to the invention, a second heat exchanger can be provided downward said reactor, lowering the temperature of the calcium hydroxide exiting from the reactor from about 100 °C to about 40 °C.

Preferably, according to the invention, heat extracted within said second heat exchanger is partly used to heat water that will be reacted with calcium oxide within the reactor, and partly to overheat the same calcium oxide within said first heat exchanger.

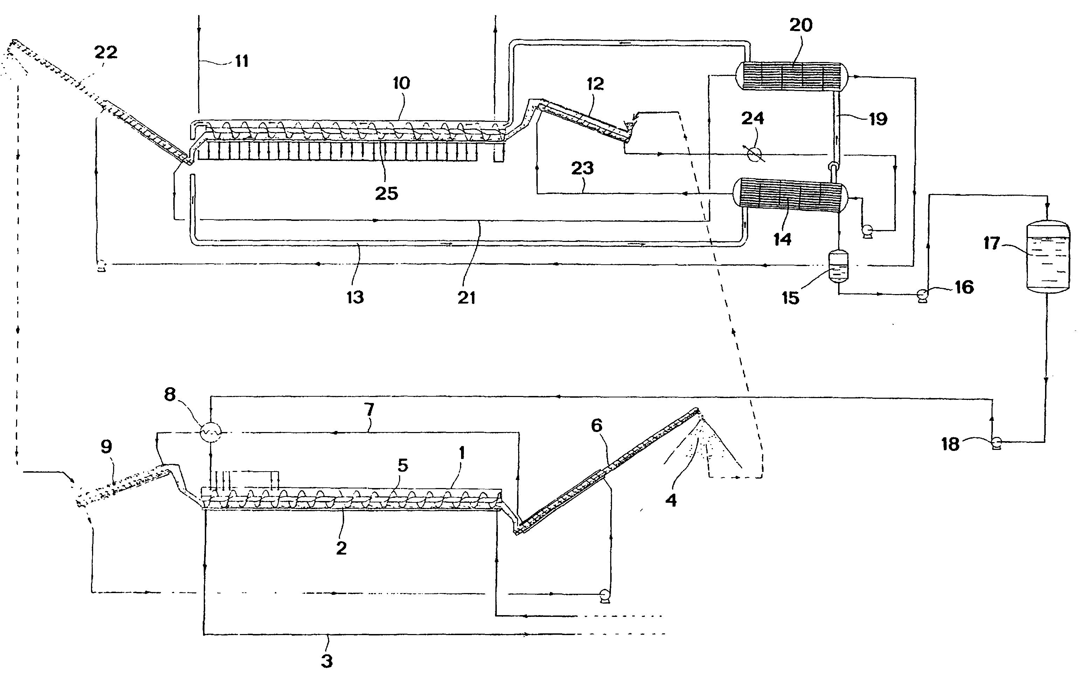

The present invention will be now described, for illustrative but not limitative purposes, according to one preferred embodiment, with particular reference to the enclosed drawing showing a scheme of a system according to the invention.

As already described, chemical reaction used to obtain the object of the present invention is the following:

CaO (calcium oxide) + H₂O (water) = Ca(OH)₂ + heat

During this reaction, 15.5 Kcal/kg of reacting oxide are developed (i.e. 64.92 kJoule/kg of oxide).

Chemical reaction will occur within the system during winter season, i.e. during the period when heating is necessary.

Heat developed is generated within a reactor 1 wherein the reaction between oxide and water occurs. Heat is extracted by water circulation within interspace 2 through tubing 3: water heated at about 80°C will transport heat within rooms to be heated, even if at a long distance.

At the exit of reactor 1, hydroxide obtained will still have a too high temperature (about 100 °C) in order to be able to discharge the same on the accumulation heap 4 In fact, it would not be justified the loss of the thermal energy.

Thus, in the embodiment shown in the figure, at the exit of reactor, Archimedian screw 5 transfers calcium hydroxide within an exchanger, in such a way to realise a heat exchange by circulating water, thus lowering calcium hydroxide temperature at about 40 °C.

Heat received from circulating water within the exchanger 6 will be then partly transferred by the tubing 7 and the exchanger 8, to the stoichiometric water that is reacting with oxide, and partly by the exchanger 9, to the same oxide which is cold and is coming from its storage.

During the advancing of the cold period storage of calcium oxide, as will be noted in the following, will exhaust, while it will increase the amount of calcium hydroxide 4 storage.

In any case, the section of the system according to the invention allowing to obtain calcium oxide will be activated during every sunny or windy day to regenerate oxide.

To this end, it will be possible to employ vapour overheated at 600 °C coming from a mirror solar central, said vapour will be then introduced within the interspace of regenerator 10 by tubing 11. Otherwise, it will be possible to employ electric energy of a photovoltaic central or of an aeolic system by the resistances 25.

Ca(OH)₂ needs a temperature of 580 °C at atmospheric pressure, to dissociate into oxide (CaO) and water.

Calcium hydroxide at ambient temperature is first introduced within an exchanger 12, within which its temperature is raised as more clearly described in the following, said calcium hydroxide entering within the regenerator 10 at a temperature higher than 500 °C.

Therefore, calcium hydroxide will begin to dissociate into calcium oxide and water, said vapour reaching the pressure of one atmosphere (10000 Pascal) at 580 °C.

Vapour is withdrawn by the tubing 13 by an air circulation and the air - vapour mixture is cooled within the condenser 14.

From condenser 14, water condensed is transferred through the small reservoir 15 and the pump 16, within the storage reservoir 17, and it will be exploited as stoichiometric water for the winter cycle the pump 18 transferring the same to the exchanger 8 of the heat generation system section.

De-humidified water at about 50 °C within the condenser 14 is again sent by the tubing 19 in the cycle after having been preheated within the exchanger 20, within which absorbs heat transferred by a water tubing 21, collecting the same from the exchanger 22, within which hot calcium oxide coming from the regenerator 10 is cooled.

Heat obtained into the condenser 14 is used sending overheated vapour through the tubing 23 into the exchanger 12 to preheat calcium hydroxide that is being introduced within the regenerator 10;; since said heat is exceeding, circulating water transfers part of the same to the dissipator 24, before entering again within the condenser 14.

By the complex system of heat recovery just described it is possible to have a more little mirror surface of the solar central with the same energy produced by the same system according to the invention.

Regenerator 10 also provides a plurality of electrical resistances 25, by which it will be possible to obtain temperature necessary to obtain the regeneration of calcium hydroxide from aeolic energy.

Obviously, even if in all the description reference has been made to the use of heat developed by reactor 1 in a tele-heating circuit, it can also be provided for different uses, among which low enthalpy the heating of houses.

For big sizes systems, i.e. able to serve final users of about 1 million of Kcal/hour during winter, a system will be employed having features similar to those of the system shown in the figure; this king of system can be used for about 100 families in different condominium.

In order to serve loose houses, or other king of users, where the tele-heating cannot be used, it can be foreseen the transport of calcium oxide 4 times each winter.

The user will have two reservoirs, one for the calcium oxide, for example able to deliver 5 million of Kcal (625 litres of gas oil) and one for hydroxide, each one having a volume of 30 m³.

In a remote zone (various kilometres) with the regeneration system, other CaO reservoirs placed on trucks are filled in, said trucks transporting the same until the user seat, where oxide is transferred by suitable pumps within the empty reservoir.

Once terminated the operation, the pump is coupled to the reservoir full of hydroxide and it is emptied transferring the substance on the truck reservoir, which transports the same to the storage with the regeneration system, where it will be regenerated as soon as possible. Otherwise, it will be possible to directly discharge and charge reservoirs filled in with oxide or hydroxide, thus avoiding the transfer with the users.

During the charging, discharging and transfer operations, air occupying an empty reservoir will be transferred while the reservoir is being emptied, thus maintaining the same always carbon dioxide free.

In this case, if civil houses provided with heating system under the floor is concerned, exchangers 6 and 9 can be omitted.

## Claims

1. A system for thermo-chemical accumulation of heat, comprising a calcium oxide regeneration section and a heat generation section, said calcium oxide regeneration section comprising an energy production central, a regenerator (10), calcium hydroxide feeding means to feed hydroxide calcium within said regenerator, and means for the separated extraction of calcium oxide and water generated by said regenerator, said heat generation section comprising a reactor (1) within which calcium oxide and water are fed, and from which heat produced by the reaction between calcium hydroxide and water, and calcium hydroxide to be sent to the regeneration station are extracted by a heat exchanger (2), **characterised in that** said energy production central provides overheated vapour at about 600°C or electric energy, **in that** the reaction between calcium oxide and water occurs with a stoichiometric amount of water, **in that** calcium oxide and calcium hydroxide are stored in physically separated places, and **in that** calcium oxide obtained in the regenerator is made passing within a heat exchanger, which lowers its temperature, extracted heat being employed to raise the water temperature, which at the beginning is at about 40°C and coming from a further heat exchanger, thus obtaining overheated vapour which is sent to said further heat exchanger, to raise the temperature of dry air coming out from said condenser and to send the same heated to the regenerator.

2. System for thermo-chemical of heat according to claim 1, **characterised in that** said regeneration sections are closed circuit connected for the calcium oxide, calcium hydroxide and water exchange.

3. System for thermo-chemical of heat according to claim 1, **characterised in that** said regeneration and generation section are separated, the transfer of the calcium oxide and calcium hydroxide occurring by transport means, preferably within reservoirs without carbon dioxide.

4. System for thermo-chemical of heat according to claim 1, **characterised in that** said calcium hydroxide is fed within said regenerator after having raised the temperature at about 500 °C within a heat exchanger.

5. System for thermo-chemical of heat according to claim 4, **characterised in that** temperature of said calcium hydroxide is raised employing overheated vapour coming from a condenser employing humid and hot air produced in the regenerator.

6. System for thermo-chemical of heat according to one of the preceding claims, **characterised in that** water extracted by said condenser from the overheated vapour coming out from the regenerator is collected within a storage reservoir, to use the same in the heat generation section.

7. System for thermo-chemical of heat according to one of the preceding claims, **characterised in that** in said heat generation section, calcium oxide is fed within a first heat exchanger, to raise its temperature up to about 30°C, before entering within the reactor.

8. System for thermo-chemical of heat according to one of the preceding claims, **characterised in that** a second heat exchanger is provided downward said reactor, lowering the temperature of the calcium hydroxide exiting from the reactor from about 100 °C to about 40 °C.

9. System for thermo-chemical of heat according to one of the preceding claims, **characterised in that** heat extracted within said second heat exchanger is partly used to heat water that will be reacted with calcium oxide within the reactor, and partly to overheat the same calcium oxide within said first heat exchanger.

## Patentansprüche

1. System zum thermochemischen Ansammeln von Wärmeenergie mit einem Kalziumoxid-Regenerationsabschnitt und einem Wärmeerzeugungsabschnitt, wobei der Kalziumoxid-Regenerations-abschnitt eine Energieerzeugerzentrale, einen Regenerator (10), eine Kalziumhydroxid-Zuführeinrichtung zur Einspeisung von Hydroxidkalzium in den Generator und eine Extraktionseinrichtung zur getrennten Entnahme von durch den Reaktor erzeugtem Kalziumoxid und Wasser enthält und wobei der Wärmeerzeugungsabschnitt einen Reaktor (1), in welchen Kalziumoxid und Wasser eingebracht werden und aus welchem durch die Reaktion zwischen Kalziumhydroxid und Wasser erzeugte Wärmeenergie und an die Regenerationsstation zu bringendes Kalziumhydroxid mit Hilfe eines Wärmetauschers (2) entnommen werden,
**dadurch gekennzeichnet, dass** die Energieerzeugungszentrale überhitzten Dampf von etwa 600°C oder elektrische Energie liefert, dass die Reaktion zwischen Kalziumoxid und Wasser mit einer stöchiometrischen Wassermenge erfolgt, dass Kalziumoxid und Kalziumhydroxid an räumlich getrennten Orten gespeichert werden und dass in dem Regenerator erhaltenes Kalziumoxid durch einen Wärmetauscher geschickt wird, der dessen Temperatur absenkt, wobei die gewonnene Wärme benutzt wird, um die Anfangs bei etwa 40°C liegende Temperatur des Wassers, welches von einem weiteren Wärmetauscher kommt, zu erhöhen und auf diese Weise überhitzten Dampf zu erhalten, der zu dem weiteren Wärmetauscher geschickt wird, um die Temperatur trockener Luft zu erhöhen, welche aus dem Kondensor kommt und welche aufgeheizt dem Regenerator zugeführt wird.

2. System nach Anspruch 1, **dadurch gekennzeichnet, dass** die Regenerationsabschnitte für den Kalziumoxid-, Kalziumhydroxid- und Wasseraustausch zu einem geschlossenen Kreislauf zusammengeschaltet sind.

3. System nach Anspruch 1, **dadurch gekennzeichnet, dass** der Regenerations- und der Erzeugungsabschnitt getrennt sind und dass der Transport des Kalziumoxids und Kalziumhydroxids mit Hilfe einer Transportvorrichtung, vorzugsweise innerhalb von Behältern ohne Kohlendioxid, erfolgt.

4. System nach Anspruch 1, **dadurch gekennzeichnet, dass** das Kalziumhydroxid dem Regenerator zugeführt wird, nachdem seine Temperatur in einem Wärmetauscher auf etwa 500°C erhöht worden ist.

5. System nach Anspruch 4, **dadurch gekennzeichnet, dass** die Temperatur des Kalziumhydroxids unter Verwendung von überhitztem Dampf erhöht wird, der von einem Kondensator kommt, wobei im Regenerator erzeugte feuchte und heiße Luft benutzt wird.

6. System nach einem der vorstehenden Ansprüche, **dadurch gekennzeichnet, dass** vom Kondensator aus dem vom Regenerator kommenden überhitzten Dampf extrahiertes Wasser in einem Speicherbehälter gesammelt wird, um es im Wärmeerzeugungsabschnitt zu benutzen.

7. System nach einem der vorstehenden Ansprüche, **dadurch gekennzeichnet, dass** im Wärmeerzeugungsabschnitt Kalziumoxid in einen ersten Wärmetauscher eingeführt wird, um seine Temperatur vor dem Einbringen in den Reaktor auf etwa 30°C zu erhöhen.

8. System nach einem der vorstehenden Ansprüche, **dadurch gekennzeichnet, dass** ein zweiter Wärmetauscher stromabwärts vom Reaktor vorgesehen ist, der die Temperatur des aus dem Reaktor austretenden Kalziumhydroxids von etwa 100°C auf etwa 40°C absenkt.

9. System nach einem der vorstehenden Ansprüche, **dadurch gekennzeichnet, dass** die in dem zweiten Wärmetauscher entnommene Wärme zum Teil zur Aufheizung des Wassers, das im Reaktor mit dem Kalziumoxid reagieren soll, und teilweise zum Überhitzen desselben Kalziumoxids innerhalb des ersten Wärmetauschers benutzt wird.

## Revendications

1. Système pour l'accumulation thermochimique de chaleur, comprenant une section de régénération d'oxyde de calcium et une section de génération de chaleur, ladite section de régénération d'oxyde de calcium comprenant une centrale de production d'énergie, un régénérateur (10), des moyens de chargement d'hydroxyde de calcium pour charger l'hydroxyde de calcium à l'intérieur dudit régénérateur, et des moyens permettant l'extraction séparée d'oxyde de calcium et d'eau générés par ledit régénérateur, ladite section de génération de chaleur comprenant un réacteur (1) à l'intérieur duquel l'oxyde de calcium et l'eau sont chargés, et à partir duquel la chaleur générée par la réaction entre l'hydroxyde de calcium et l'eau, et l'hydroxyde de calcium à transférer à la station de régénération sont extraits par un échangeur de chaleur (2), **caractérisé en ce que** ladite centrale de production d'énergie produit de la vapeur surchauffée à environ 600°C ou une énergie électrique, **en ce que** la réaction entre l'oxyde de calcium et l'eau se produit avec une quantité stoechiométrique d'eau, **en ce que** l'oxyde de calcium et l'hydroxyde de calcium sont stockés en des emplacements physiquement séparés, et **en ce que** l'oxyde de calcium obtenu dans le régénérateur est transféré de manière à passer à l'intérieur d'un échangeur de chaleur, qui réduit sa température, la chaleur extraite étant employée pour accroître la température de l'eau, qui au début est à environ 40°C et provient d'un autre échangeur de chaleur, pour obtenir ainsi de la vapeur surchauffée qui est transférée audit autre échangeur de chaleur, pour accroître la température de l'air sec provenant dudit condenseur et pour transférer ce dernier chauffé au régénérateur.

2. Système pour 1' accumulation thermochimique de chaleur selon la revendication 1, **caractérisé en ce que** lesdites sections de régénération constituent un circuit fermé connecté pour l'échange d'oxyde de calcium, d'hydroxyde de calcium et d'eau.

3. Système pour l'accumulation thermochimique de chaleur selon la revendication 1, **caractérisé en ce que** lesdites sections de régénération et de génération sont séparées, le transfert de l'oxyde de calcium et de l'hydroxyde de calcium s'effectuant par des moyens de transport, de préférence à l'intérieur de réservoirs exempts de dioxyde de carbone.

4. Système pour l'accumulation thermochimique de chaleur selon la revendication 1, **caractérisé en ce que** ledit hydroxyde de calcium est chargé à l'intérieur dudit régénérateur après avoir accru la température jusqu'à environ 500 °C à l'intérieur d'un échangeur de chaleur.

5. Système pour 1' accumulation thermochimique de chaleur selon la revendication 4, **caractérisé en ce que** la température dudit hydroxyde de calcium est accrue en employant la vapeur surchauffée provenant d'un condenseur utilisant l'air humide et chaud produit dans le régénérateur.

6. Système pour 1' accumulation thermochimique de chaleur selon l'une quelconque des revendications précédentes, **caractérisé en ce que** l'eau extraite par ledit condenseur à partir de la vapeur surchauffée provenant du régénérateur est récupérée à l'intérieur d'un réservoir de stockage, pour utiliser cette dernière dans la section de génération de chaleur.

7. Système pour 1' accumulation thermochimique de chaleur selon l'une quelconque des revendications précédentes, **caractérisé en ce que** dans ladite section de génération de chaleur, l'oxyde de calcium est chargé à l'intérieur d'un premier échangeur de chaleur, pour accroître sa température jusqu'à environ 30°C, avant son entrée à l'intérieur du réacteur.

8. Système pour 1' accumulation thermochimique de chaleur selon l'une quelconque des revendications précédentes, **caractérisé en ce qu'**un second échangeur de chaleur est installé en aval dudit réacteur, pour réduire la température de l'hydroxyde de calcium sortant du réacteur depuis environ 100°C jusqu'à environ 40°C.

9. Système pour 1' accumulation thermochimique de chaleur selon l'une quelconque des revendications précédentes, **caractérisé en ce que** la chaleur extraite à l'intérieur dudit second échangeur de chaleur est utilisée en partie pour chauffer l'eau qui sera mise à réagir avec l'oxyde de calcium à l'intérieur du réacteur, et en partie pour surchauffer ce même oxyde de calcium à l'intérieur dudit premier échangeur de chaleur.
